# EUROPÄISCHE PATENTSCHRIFT

(11) **EP 1 925 217 B1**
(45) Veröffentlichungstag und Bekanntmachung des Hinweises auf die Patenterteilung: **17.08.2011**
(21) Anmeldenummer: 07018235.7
(22) Anmeldetag: 18.09.2007
(51) Int. Cl.: A23N 1/02, B30B 9/04, B65B 65/02, C11B 1/06

(54) **Anlage zur Kaltpressung für Olivenfleisch**
Unit for cold pressing the flesh of olives
Installation destinée à la pression à froid pour pulpe d'olive

(30) Priorität: 24.11.2006 DE 102006055594
(43) Veröffentlichungstag der Anmeldung: 28.05.2008
(73) Patentinhaber: Ouranos, Emmanuel, 50354 Hürth (DE)
(72) Erfinder: Ouranos, Emmanuel, 50354 Hürth (DE)

(56) Entgegenhaltungen:
- WO-A-97/04952
- WO-A-2004/108868
- CH-A- 172 809
- FR-A- 2 220 371
- FR-A- 2 409 851

## Beschreibung

Die Erfindung betrifft eine Anlage zur Kaltpressung des Olivenfleisches nach vorheriger Entfernung des Olivenkernes mit neben oder auf einer Preßstraße für Container angeordneten Geräten, bestehend aus einer Entkernungsmaschine, einer Bleche-Lademaschine über einem zu füllenden zylindrischen Container und einer Pressezentrifuge.
Bei dem heute üblichen Verfahren der Ölgewinnung aus der Olive werden die Oliven zertrümmert mit einer Art Hammermaschine, dabei werden die Oliven zerschlagen einschließlich der Kerne. Beispielsweise ist eine Entkernungsmaschine aus der EP1 232 695 A2 bekannt.
Dieser Olivenbrei wird durch eine Archimedes-Schraube weiterbefördert in quer gelegte, fest stehende Container, die innen ein schraubenartiges Rührgerät in der gesamten Länge haben, das eine bestimmte Zeit den Inhalt (Olivenbrei) des Containers durch einen Motor rührt.
Die Container werden anscheinend durch Wärmeschlangen mit Wasser von außen erwärmt. Der Olivenbrei hat eine Temperatur von etwa 30 Grad.
Diese Temperatur ist schädlich für das Öl, weil in Wirklichkeit die Oliven kalt gepreßt werden müßten, um ihre Inhaltsstoffe nicht zu verlieren.
Der Olivenbrei wird von dem Container zu der Zentrifuge (Decanter) gepumpt. Eine Zentrifuge ist beispielsweise aus der CH 396 635 A bekannt.
Der Decanter trennt die Olivenmasse in drei Teile: das Abwasser, den Ölmost und den Trester.
Von zwei parallelen Rohren läuft aus einem Rohr der Ölmost (Saft der Olive), und von dem anderen Rohr läuft das Abwasser.
Der Ölmost wird von einem Trennfilter in Öl und Rückstände der Olive getrennt.
Nach meinen Beobachtungen konnte ich feststellen, daß das Abwasser nicht reines Abwasser war, sondern es enthielt noch genügend Öl. Man konnte das glänzende Öl sehen.
Aus dem dritten Ausgang dieser Zentrifuge (Decanter) kommt der Trester von den Oliven, der übernommen wird von einer
Archimedes-Schraube und ins Freie hinausgeworfen wird, um von Lastwagen der Firmen, die Fabriken haben, das Öl vom Trester zu gewinnen, abgeholt zu werden.

Solange der Trester ins Freie geworfen wurde, konnte jeder Bauer, der sich interessierte, den Trester in die Hand nehmen und fest drücken, um zu sehen, wieviel Öl in seinem Trester zurückgeblieben war. Die Bauern waren oft empört, wenn sie sahen, wieviel Öl der Trester enthielt, denn diesen Trester nahmen die Bauern nicht mit, denn er gehörte ihnen nicht mehr. Sonst hätten die Bauern mehr Ö1 an die Ölmühlen abgeben müssen.
Die Besitzer der Ölmühlen verkaufen den Trester an Fabriken, die spezialisiert sind, von dem Trester durch chemische Verfahren, wie bei chemischer Reinigung, (früher mit Dioxan, wie ich erfahren hatte) das Öl zu gewinnen und weiter als Speiseöl zu verkaufen. Neuerdings haben die Besitzer der Ölmühlen große Trester-Behälter auf hohen Stelzen aufgestellt, so daß die Lastwagen von unten hereinfahren und den Trester laden und abholen.
Und so können die Bauern nicht einmal mehr den Trester von ihren eigenen Oliven überprüfen, wieviel Öl er noch enthält.
Es ist notwendig, daß das Olivenfleisch von dem Kern getrennt, allein gemahlen (zerrieben) und kalt gepreßt wird, damit das gesamte Öl gewonnen wird, und gleichzeitig seine Substanzen unverändert bleiben.
Das gepreßte Material, das aus der Preßzentrifuge kommt, ist reines Fleisch der Olive. Dieses Material kann bearbeitet werden zu Tierfutter oder auch als unverfälschte menschliche Nahrung verwertet werden.
Die Oliven werden jetzt immer noch gekauft und gegessen in getrockneter Form oder in Flüssigkeit gelegt.

Beispielsweise ist eine Anlage zur Kaltpressung aus der CH 272 909 bekannt.

Deswegen bin ich, nachdem ich die jetzige Praxis auch als Kunde gesehen habe, zu dem Entschluß gekommen, Maschinen zu konstruieren, die Oliven entkernen, das Olivenfleisch gut mahlen und kalt pressen.

Der Erfindung liegt folglich die Aufgabe zugrunde, eine effiziente Anlage zur Kaltpressung des Olivenfleisches zu schaffen, bei der die beschriebenen Probleme nicht auftreten.
Diese Aufgabe wird durch einen Gegenstand mit den Merkmalen des Patentanspruchs 1 gelöst. Weitere Ausgestaltungen sind den Unteransprüchen zu entnehmen.

Daher beginnt meine Oliven-Preßanlage mit einer Entkernungsmaschine. Die Oliven werden nach Entfernung des Kernes gemahlen und kalt gepreßt mit der Preßzentrifuge. Nur minimale Wassermengen werden, wenn nötig, in dem Innern der Entkernungsmaschine in der Endphase in Abständen mit hohem Druck an die Wände und Messer gespritzt (nebelartig), damit geklebtes Olivenfleisch und Schalen von den Messern und Wänden hinunter zu der Siebzentrifuge fließen und von da zu dem stehenden Container unter der Blechlademaschine gelangen.

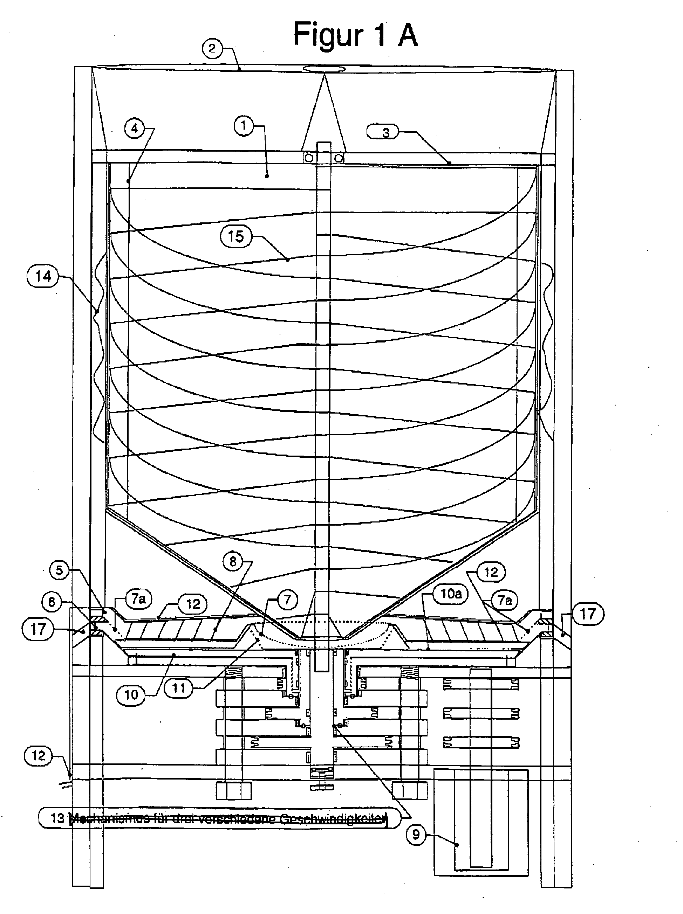

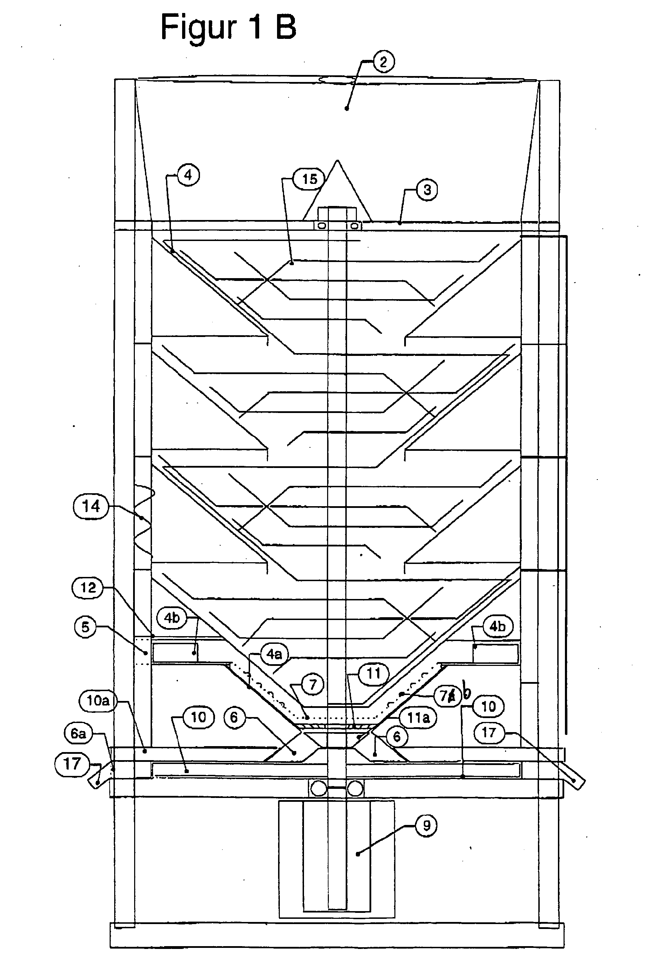

**Fig.1** **A Entkernungsmaschine**
(**1**) stellt die Entkernungsmaschine insgesamt im Längsschnitt dar.
(**2**) ist der Olivenkorb: Die Oliven passieren den Olivendurchlaß (**3**)**,** der veränderlich nach Größe und Menge der Oliven und auch verschließbar ist, und fallen in die Entkernungsmaschine (**1**).
Der Schaufelwandsäuberer (**4**) entfernt das Oliven-Material von den Wänden, so daß es zurück zu den Messern (**15**) der Entkernungsmaschine fällt, weiter geschlagen wird, so daß das gesamte Fleisch von den Olivenkernen abfällt. Das Material fällt auf die Siebzentrifuge (**7**), die mit einem Saugpropeller (auch als Saugventilator bezeichnet) (**11**) arbeitet, der das Olivenfleisch unter das Sieb saugt, so daß das gesamte Fleisch hinunter fällt. Durch Zentrifugalkraft schleudert der Propeller (**11**) das Olivenfleisch unter die Mahlsteine (**10**) zur völligen Zerkleinerung.

Die Kerne können das Sieb nicht passieren und fliegen seitlich nach oben heraus zu einem Gittergeflecht (**8**), wo das restliche Olivenfleisch und an den Kernen klebende Masse entfernt werden. Dieses Material fällt wieder durch ein seitliches Sieb (**7a**) hinunter und bewegt sich mit dem übrigen Olivenfleisch zum Olivenfleischausgang (**6**).

Die Kerne passieren den Kerneausgang (**5**), gelangen in eine Wanne mit Wasser und werden gewaschen, (dieses ölhaltige Wasser wird gespritzt in die Entkernungsmaschine durch Düsen mit hohem Druck, wenn die Kerne viel Öl im Wasser zurücklassen). Die Kerne werden hinausgeworfen von dem Wasserbehälter in einen Zerstampfer und werden zerstampft, fallen in einen Behälter, in dem schon die zerkleinerten Olivenblätter sind. Diese Olivenblätter sind vor dem Waschvorgang der Oliven abgetrennt worden durch einen Ventilator, der die Blätter weiter zu einer im Rohr befindlichen Blätter-Zerkleinerungsmaschine befördert hat, sind zerkleinert und weiter befördert worden zu dem Behälter, in dem sich schon die zerstampften Kerne befinden. Das Zerreißen der Blätter dient dazu, in dem Brei die Flüssigkeit zu binden und später abdampfen zu lassen. Auch die Rückstände von der Trennung des Ölmosts fließen in diesen Behälter. Sie werden zusammengerührt, um nachträglich zu Briketts zur Feuerung gepreßt zu werden, oder um zu Humus zu werden, oder auch den Bauern als Mulch für die Olivenbäume zurückgegeben zu werden, letztendlich um Humus entstehen zu lassen.
Das von mir entwickelte Verfahren dient dazu, die Umwelt zu schonen und alle Materialien der Olive zu nutzen.

(9) stellt einen Elektromotor dar, der mit einem Mechanismus für drei verschiedene Geschwindigkeiten (**13**) arbeitet. (**12**) ist eine Wasserzuleitung mit Druckwasserdüsen (Zerstäubung), die geringe Mengen von Wasser in verschiedenen Abständen auf die Wände spritzen, um den Lauf der Olivenmasse zu erleichtern und ihren Transport nach unten, in den Bereich der Siebzentrifuge zu gewährleisten.
(**7a**) seitliches Sieb für Olivenfleisch und Flüssigkeit: Fleisch, das von den Kernen abfällt und durch das Sieb sich mit dem übrigen Fleisch mischt.
(**8**) Gitter vor dem Kernedurchlaß, das die Kerne passieren, um sich von dem letzten Fleisch und geklebten Fleischteilchen zu entblößen.
(**10**) Mahlsteine, die das zerkleinerte Olivenmaterial zusätzlich zermahlen
(**13**) Mechanismus für drei verschiedene Geschwindigkeiten mit dem gleichen Motor: Diese Vorrichtung dient dazu, daß die Spindel mit den Messern (**15**), die die Entkernung verursacht, keine hohe Geschwindigkeit (hier die niedrigste von drei Geschwindigkeiten) hat, damit die Kerne nicht bei hoher Geschwindigkeit zerschlagen werden. Die nächst höhere Geschwindigkeit ist dafür, daß die Kerne hinausbefördert werden. (Kerne dürfen auch hier nicht zerschlagen werden, da sonst Gefahr besteht, daß Kernesplitter durch das Sieb gehen und sich mit dem Fleisch mischen. Die höchste Geschwindigkeit bewegt die Mahlvorrichtung und zentrifugiert gleichzeitig das Fleisch und Flüssigkeit nach außen, zu (**6**) Olivenfleisch-Ausgang.
Beide Mahlsteine (**10**) sind frei beweglich und werden in einer Richtung bewegt. Der untere Mahlstein (**10**) bewegt sich schneller als der obere, so daß er das dazwischen fliegende (durch die Zentrifugalkraft) Oliven-Fleisch zerreibt.
(**14**) bedeutet Dämmaterial, damit der Lärm in dem Entkernungsraum eingedämmt wird.

Fig.1B zeigt eine Entkernungsmaschine mit zwei Saugventilatoren. Der untere Ventilator (**11a**) wirft das Olivenfleisch in zwei Richtungen unter die Mahlsteine (**10**). In diesem Fall bewegt sich der obere Mahlstein (**10a**) nicht.
Diese Entkernungsmaschine arbeitet in mehreren geteilten Stufen der Spindel. Das geschlagene Material von der oberen Stufe wird durch den Schaufelwandsäuberer (**4**) gesammelt und hinunter befördert in die Mitte der trichterartigen Öffnung zu der nächsten Stufe, von der aus sich der Vorgang bis zur letzten Stufe wiederholt, so daß möglichst das gesamte Fleisch von den Kernen entfernt wird.
Die Spindel (**15**) der Entkernungsmaschine 1 B und ihr Aufbau in mehreren Stufen kann auch bei der Entkernungsmaschine 1 A eingesetzt werden.
Das Fleisch und die Kerne fallen am Schluß, am Ende der letzten Stufe, auf die Siebzentrifuge **(7).** Das Fleisch wird angesaugt unter das Sieb **(7)** von zwei Saugventilatoren **(11)** und (**11a**) zu zwei Ausgängen (**6**),rechts und links,
unter den stehenden Mahlstein
(**10**) Der bewegliche Mahlstein (**10a**) durch die Zentrifugalkraft saugt und mahlt das Olivenfleisch. Das gemahlene Olivenfleisch verläßt die Entkernungsmaschine durch den Ausgang (**6a**) mit der Schnute (**17**).
Halbkugelförmige Erhebungen (**7b**) sind von außen nach innen in Abständen in das Sieb (**7**) gestanzt, so daß die herausfliegenden Kerne an diese Rundungen schlagen und verbliebenes Fleisch und Flüssigkeit abstreifen. Eine ringsum laufende Schaufel (**4b**) vor dem Kerneausgang (**5**) ist verbunden mit dem Saugventilator (**11**) und befördert die Kerne, die nach oben laufen, hinaus.
Wenn von den Kernen Fleisch hinunter durch das Sieb (**7**) fällt und auf den Wänden des stehenden (nicht beweglichen) trichterartigen Teils klebt, wird es durch den Schaber (**4a**) gesammelt und hinunter befördert zu den Ventilatoren (**11**) und (**11a**), mischt sich mit dem übrigen Olivenfleisch, das ständig von oben fließt und wird hinuntergesaugt zu den Ausgängen (**6**), rechts und links.

Zwischenräume werden mit Schallisolierungsmaterial (**14**) gefüllt.

Das Olivenfleisch und die Flüssigkeit gelangen aus der Entkernungsmaschine in einen Container (**16**) auf der Preßstraße (siehe nachfolgend), dabei ist der Ausgang der Entkernungsmaschine durch ein kurzes Ausgangsrohr mit Schnute (**17**) mit der inneren oberen Kante des Containers, die eine Trichter ähnliche Verbreiterung des Container-Randes (**18**) ist, verbunden.

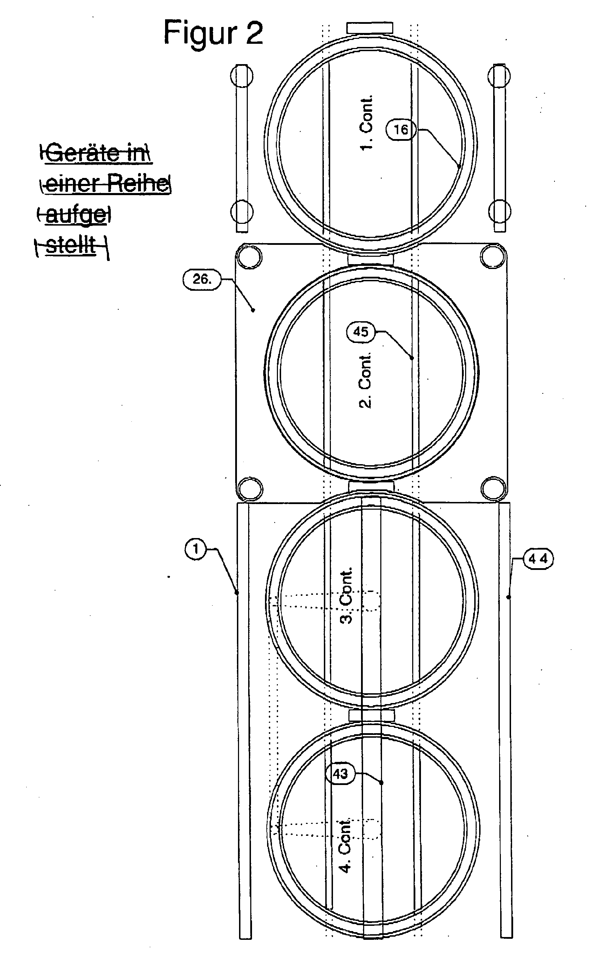

**Fig.2** zeigt die Preßanlage in gerader Form in Draufsicht, mit den Containern (**16**) in Reihe gestellt. Unter dem Laufband (**43**) befindet sich ein Motor (**9**), der die Drehung des Containers (**16**) bewirkt. Desgleichen hat jeder Container einen Rüttelmotor auf dem Laufband unter sich, der eine Vibration des Containers hervorruft. Der Inhalt des 1. Containers (**16**) ist gepreßt. Der Container steht daher in der Ausgangsstelle der Preßanlage, bereit weggenommen zu werden.
Der 2. Container hat den Platz auf dem Boden der Pressezentrifuge (30) eingenommen, bereit für den Preßvorgang.
Die 3. und 4. Container stehen auf dem Laufband (**43**). Dieses Laufband schiebt die Container in den Boden der Pressezentrifuge (**30**), bzw. vorher an die Entkernungs-(**1**) und Blechelademaschine (**44**), und sogar nach dem Pressen zum Ausgang der Preßstraße. Eine Vorrichtung (**46**), die sich zwischen den Containern befindet, sorgt dafür, daß jeder Container, einer nach dem anderen, auf den Platz neben der Entkernungsmaschine (**1**) und
Blechladevorrichtung (**44**) geschoben wird, und danach zur Basis der Pressezentrifuge (**30**) befördert wird.

Hat der Container, der an der Entkernungs-und Blechelademaschine gefüllt worden ist, seinen Platz an der Presse eingenommen, hat er vorher den Container, der sich auf dem Pressezentrifugenboden befand, zu dem leeren Platz hinausgeschoben (**Ausgang**). Dieser verläßt das Laufband. Ein leerer Container (**16**) auf dem Laufband (**43**) nimmt den Platz an der Entkernungs- und der Blecheladevorrichtung zur Füllung ein.

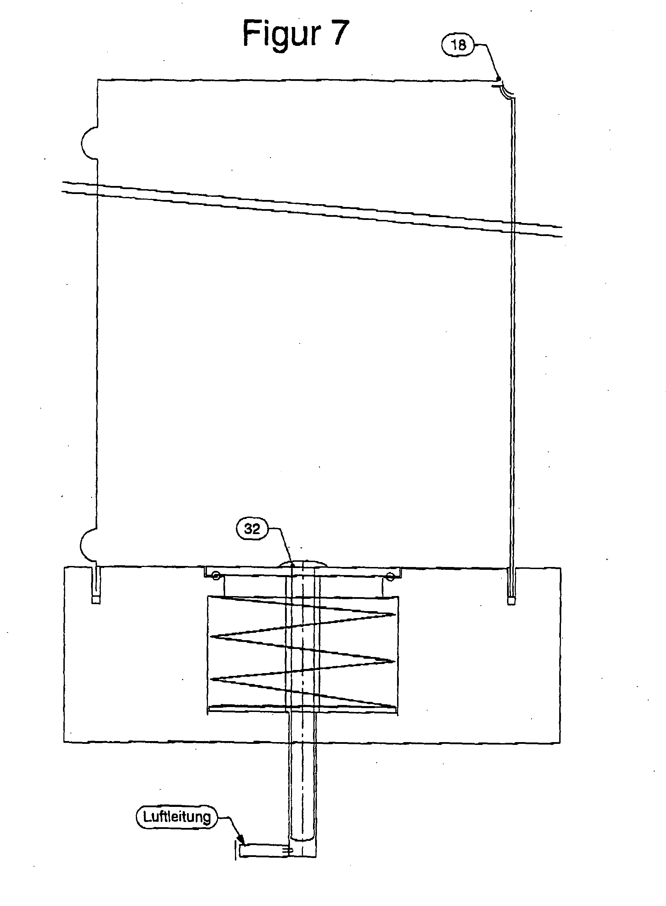

Das Verfahren der Füllung des Containers geht wie folgt vor sich: Die Schnute (**17**) der Entkernungsmaschine (**1**) geht in die trichterähnliche Verbreiterung (**18**) am oberen Rand der Innenseite des Containers (**16**) (siehe dazu auch **Fig.7**), wobei (**18**) nicht das Herablassen der Bleche (**50**) aus der Blechlademaschine (**44**) behindert. Auf dem Boden des Containers gibt es ein extra-Blech (**50**), ohne Loch in der Mitte, auf dem nach dem Preßvorgang das gepreßte Material mit Hilfe einer Gabelstapler-ähnlichen Vorrichtung wegbefördert wird.

Sobald die Füllung des Containers mit einer kleinen Menge begonnen hat, beginnt ein automatischer Wiegevorgang der Füllmenge. Gleichzeitig hat der Drehmotor Signal bekommen, den Container zu drehen. Der Rüttelmotor unter dem Container unter dem Laufband (**43**) hat begonnen, den Container vibrieren zu lassen. Durch die Drehung fällt das Olivenfleisch ringsherum gleichmäßig auf den Boden des Containers. Durch die Vibration wird bewirkt, daß das eingefüllte Material sich regelmäßig auf dem Boden ausbreitet. Die Flüssigkeit steigt nach oben, die in den Hohlraum der Doppelwand des Containers durch die Innenwand, die ein Sieb ist, abfließt.

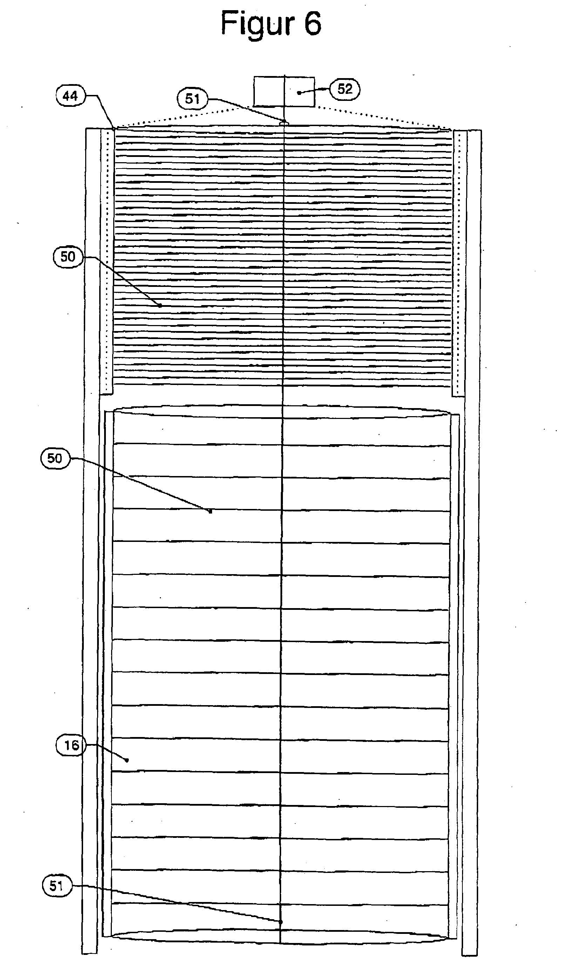

Die Blechelademaschine bzw. Bleche-Ladevorrichtung (**44**) (siehe auch **Fig.** 6) ist direkt über dem Container angebracht.
Sie hat einen teleskopartigen Führungsstab (**51**) in ihrer Mitte, der bis auf die Mitte des Bodens des Containers reicht. Nach Signal der Waage an den Kontrollmechanismus (**52**) nach dem Wiegen der eingefüllten Masse nach einem bestimmten Gewicht wird ein Blech (**50**) auf das Füllmaterial in den Container hinunter gelassen, geführt von dem teleskopartigen Führungsstab (51). Während des Herunterlassen des Bleches (**50**) arbeitet die Entkernungsmaschine (**1**) weiter und setzt die Füllung fort. Desgleichen läßt die Blechlademaschine ein Blech nach dem anderen nach einem bestimmten Gewicht der Füllmasse hinunter in den Container. Die Füllmenge wird kontinuierlich weiter gewogen. Und so wird immer wieder die Masse in Etagen getrennt in einer Dicke, die nach der Füllung des Containers eine gute Pressung ermöglicht. Die Füllung wird fortgesetzt, bis der Container insgesamt gefüllt ist. Die Füllmenge insgesamt ist bereits gewogen. Nach dem Herablassen des letzten Bleches stoppt das Steuer-Programm momentan den Olivendurchlaß (**3**) der Entkernungsmaschine (**1**), um Zeit zu geben, daß das Förderband den gefüllten Container in die Pressezentrifuge (**30**) hineinschiebt, und so wird der vorher gepreßte Container hinaus auf den Ausgangsplatz befördert.

Auf dem Boden der Pressezentrifuge (**30**) gibt es zwei parallele längliche Vertiefungen (**34**). In dem Boden dieser Vertiefungen gibt es zwei Schienen (**45**) in der ganzen Länge der Vertiefungen. Bevor ein Container hinein in die Pressezentrifuge fahren kann, werden diese Schienen hydraulisch hochgeschoben, deren Oberteil sind, so daß die Schienen (**28**) auf dem Boden (**27**) des Containers hineinfassen können. Die Schienen (**45**) besitzen an ihrer oberen Fläche entlang, quer der Schiene versenkte Rollen, so daß die Schienen des Containers darauf rollen können. Wenn der Container in der Mitte der Pressezentrifuge Platz genommen hat, senkt sich automatisch hydraulisch die Hebevorrichtung herunter, so daß die Schienen des Containers exakt auf der Mitte der Pressezentrifuge sitzen, so daß der Container beim Zentrifugieren nicht von dem Boden der Presse weggeschleudert werden kann.

Vor Beginn der Pressung werden die vier Ausflüsse (**32**) auf dem Boden des Containers geöffnet, so daß die Flüssigkeit, die sich bisher in dem Hohlraum der Zwischenwand des Containers gesammelt hatte, abfließen kann. Nachdem diese Flüssigkeit abgeführt ist, beginnt die Presse bei geöffneten Ventilen den Preßvorgang. Unter der Platte der Pressezentrifuge (**30**) befindet sich ein Auffangkanal (**33**), der auf der Basis der Presse liegt, für die Flüssigkeit, die den Container verläßt.

Es wird gepreßt. Gleichzeitig setzt die Zentrifuge ein. Es wird gepreßt und zentrifugiert, bis ein automatischer Fühler zeigt, daß keine Flüssigkeit mehr von dem Ausgang des Containers herauskommt.
Der Preßstempel selbst ist so konstruiert, daß er kein Material nach oben steigen läßt. So kann die Flüsigkeit nur durch das Sieb in die Doppelwand des Containers hineinfließen und von den vier Ausgängen des Containerbodens den Container verlassen.

Wenn der Preßvorgang endgültig zu Ende ist, schließen die Ventile wieder. Presse und Zentrifuge kommen zum Stehen. Der Preßstab zieht sich automatisch aus dem Container nach oben heraus und gibt den Container frei. Der Container wird von seinem tief sitzenden Platz an der Presse (**30**) hydraulisch hochgehoben und gibt Signal, den nächstgefüllten Container hinein in die Presse zu fahren. Automatisch schiebt der Container, der hinein in die Presse kommt, den vorher gepreßten Container hinaus an den Ausgangsplatz. Nach Verlassen der Presse wird er durch ein Band weiter transportiert zu einem Platz, wo er entleert und vorbereitet wird, seinen Platz in der hinteren Reihe der Presse-Anlage einzunehmen.

Das gepreßte Material auf den Blechen ist das reine Fleisch der Olive. Es kann direkt oder bearbeitet in den Handel kommen als Tierfutter oder auch als menschliche Nahrung verwendet werden.

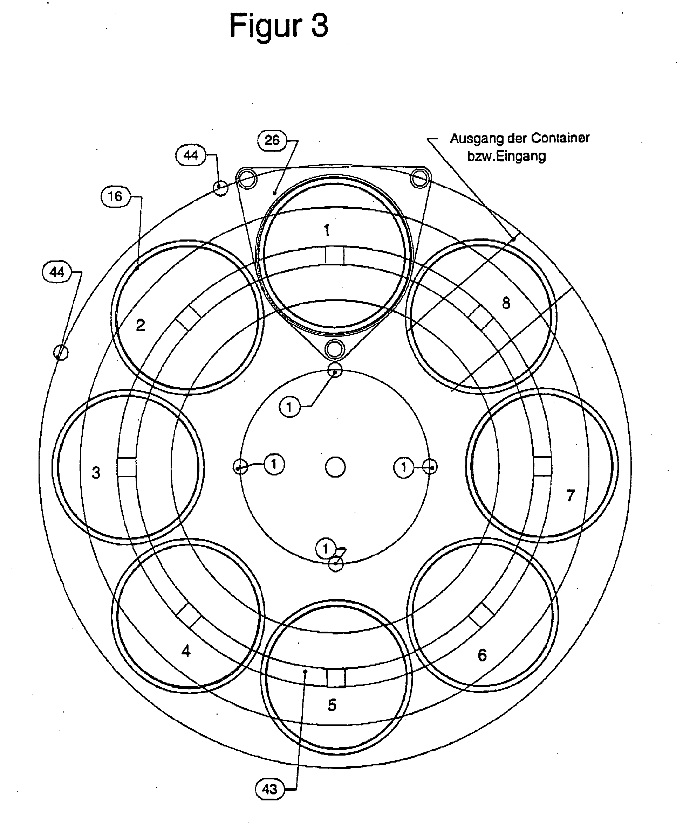

**Fig.** 3 zeigt die Laufstraße in kreisförmiger Form in Draufsicht. Die Container (**16**) 101-108 sind im Kreis um die Entkernungsmaschine (**1**) angeordnet. Neben der Basis der Pressezentrifuge (**26**) befindet sich der Ausgang bzw. Eingang für die Container, die das Laufband verlassen bzw. in das Laufband (**43**) eingefädelt werden.
Motoren für die Drehung und Vibration der Container (**16**) befinden sich unter dem Laufband (**43**).

Die Entkernungsmaschine (**1**) in der Mitte der Anlage kann, sich um ihre eigene Achse zu dem zu füllenden Container drehend, einen Container nach dem anderen füllen. Dasselbe kann sie auch in gerader Bewegung bei der geraden Preßstraße (**Fig. 2**) ausführen, verbunden jeweils mit der Blechlademaschine.
Die Blechlademaschine (**44**) steht in der kreisförmigen Laufstraße über dem jeweils zu füllenden Container und ist auf der einen Seite mit der Entkernungsmaschine gekoppelt, und auf der Außenseite der Laufstraße auf Stelzen gegenüber dem zu füllenden Container angebracht. Sie wird durch die Drehbewegung der Entkernungsmaschine (**1**) zu dem zu füllenden Container mitsamt ihrem Standgerät synchron mitbewegt.
Der 8. Container im Bild, der bereit ist, das Laufband (**43**) zu verlassen, wird um 90 Grad gedreht, von seinem Platz genommen, um geleert zu werden. Ein leerer Container wird an seinen Platz gestellt.

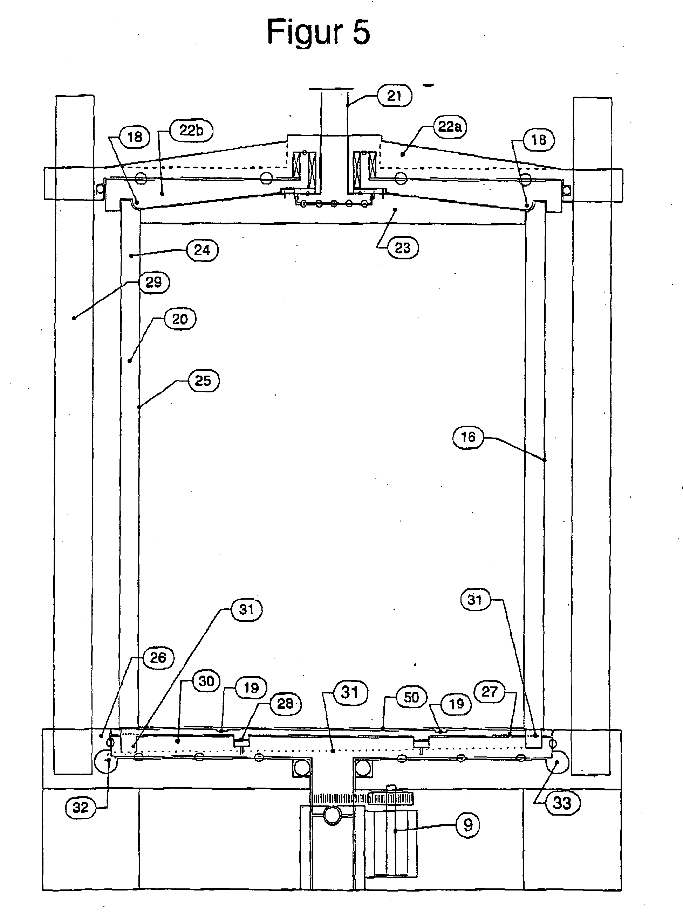

**Fig**.4 zeigt den Grundriß des Bodens der Basis der Presse (**26**), der zwei kreisausschnittsförmige Aussparungen hat, um den Eingang und Ausgang der Container (**16**) zu erleichtern. Der äußere Einzel-Kreis liegt in dem Boden der Presse und stellt einen kreisrunden Ölabflußkanal (33) dar, der abschüssig ist, ebenso wie der Vertiefungskanal auf dem Zentrifugenboden (**31**) (siehe auch **Fig.** 5). Der äußere Doppelkreis dient dazu, die Außenwand des Containers in seine Vertiefung hineinzusetzen. Ebenso der innere Doppelkreis hat in seiner Mitte eine Vertiefung, wo die Innenwand des Containers (Doppelfilter) sich hineinpasst. Auf dem Boden dieser Vertiefungen sitzen jeweils zwei Plastik- oder Gummiringe, um zu verhindern, daß Flüssigkeit hinausläuft.
Es werden auch die vier Abflüsse (**32**) des Bodens des Containers gezeigt. Der gestrichelter Kreis (**32a**) stellt den Sammelpunkt des Abflusses der Preßzentrifuge in die Bodendrainage (**33**) dar, die die Flüssigkeit zu einem Behälter führt und von da weiter zu dem Trennfilter, um filtriert zu werden.
Die Flüssigkeit, die durch den Trennfilter von dem Öl getrennt ist, der Wasseranteil der Olive, fließt in einen Behälter, der vorher schon zerkleinerte Olivenblätter und zerstampfte Kerne aufgenommen hat, um zusammengemischt zu werden, um so das Ausgangsmaterial für Briketts oder natürlichen Dünger zu bilden.
So ist ökologisch der Kreis von Olive zu den Endprodukten geschlossen. Wenn wir die Oliven auf dem Baum gelassen hätten, wären sie mit der Zeit auf den Boden gefallen, dort verfault oder von den Tieren gegessen worden, so daß das Endprodukt der Humus gewesen wäre.

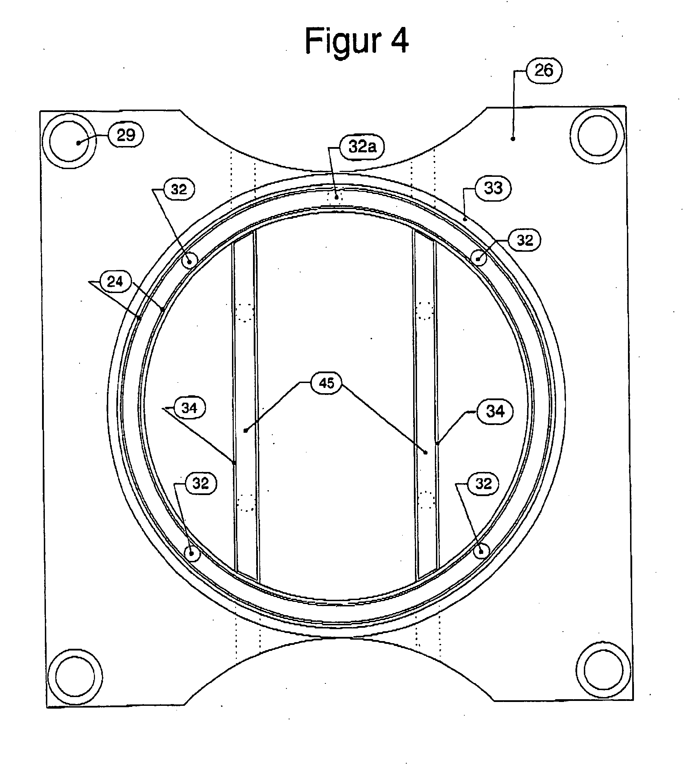

Dargestellt sind in Fig. 4:
1. die Basis des Presse-Zentrifugenbodens bzw. Preßanlage (**26**),
2. die vier Säulen der Presse (**29**).
3. Zwischen der Doppelwand des Containers (**24)**, auf der Basis der Zentrifuge ist ein abschüssiger Kanal (**31**) (siehe auch **Fig.** 5), der so graviert auf dem Boden der Basis der Presse-Zentrifuge ist, daß seine tiefste Stelle der Ausgang (**32**) ist, so daß die ganze Flüssigkeit von dem Vertiefungskreis dahin läuft.
Genau so abschüssig ist der Kanal (**33**) um die Presse herum angelegt.
Auf dem Boden des Pressezentrifuge sind dargestellt: die weiblichen Vertiefungen (**34**). In den Vertiefungen (**34**) befinden sich zwei Schienen (**45**), die hydraulisch hochkommen.

**Fig.**5 zeigt im Längsschnitt die Presse-Zentrifuge. Zu sehen sind: (**21**) der Preßstab, der hydraulisch arbeitet, und an seiner tiefsten Stelle mit dem Preßstempel (**23**) verbunden ist. Der Preßstab dreht nicht, wenn die Zentrifuge arbeitet, nur der Preßstempel dreht zusammen mit dem gesamten Container (**16**).
(**22a**) ist der Deckel der gesamten Presse-Anlage, der auf den vier senkrecht stehenden Säulen (**29**) aufsitzt und den Container (**16**) und die Zentrifuge stabil hält (dreht nicht).
(**22b**) stellt den Containerhalter dar, der den Container in seiner Position hält (dreht mit, wenn die Zentrifuge in Bewegung ist).
(**24**) sind die Außen- und Innenwände des Containers, der sich auf dem Boden der Preßzentrifuge (**30**) befindet. Der Container hat in seinem Innenraum das Olivenfleisch aufgenommen, und führt durch das Containersieb (**25**) (Filter) (bzw. Doppelfilter) die Flüssigkeit (Wasser und Öl) in den Hohlraum der Doppelwand (**20**).

Die Bodenplatte der Presse-Zentrifuge (**30**) verbindet sich mit der Außenwand und Innenwand (Sieb) (**24**) des Containers und wird mit dem Boden des Containers (**27**) fest verschlossen. Beim Entfernen des Containers aus dem Bereich der Presse wird seine Bodenplatte aufgeschlossen, Außenwand und Innenwandsieb werden hochgezogen und das festgepreßte Material auf dem Containerboden entfernt durch eine Gabelstaplervorrichtung, die unter das unterste Blech hineingeschoben wird in zwei Aussparungen (**19**), um Bleche mit dem ausgepreßten Olivenfleisch zu befördern.

Ein neues, ungelochtes Blech (**50**) wird auf den Boden des Containers gelegt, die Wände wieder heruntergelassen auf den Boden des Containers und werden verschlossen. Der Container wird mit dem Band, das von Preßstraße wegführt, gebracht zu der letzten Stelle der Preßstraße, dem Ausgang.

Es stellen in der Zeichnung dar:
(**20**) Hohlraum der Doppelwand,
(**28**) Containerschiene unter dem Containerboden.
(**19**) sind zwei Aussparungen im Containerboden zum Durchführen der Gabel des Staplers, um das unterste Blech, das auf dem Boden des Containers liegt, zu fassen und zusammen mit dem gesamten gepreßten Material herauszuholen.

(**31**) ist die abschüssige Führung des Flüssigkeitskanals des Presse-Zentrifugenbodens zum Ausgang (**32**), der in den Abflußkanal (**33**) fließt, der sich seitlich außen um die Bodenplatte des Pressebodens
(**26**) ringsherum befindet und mit einem Rohr in einen Auffangbehälter mündet, von wo die Flüssigkeit weiter zum Öltrennfilter geleitet wird.

**Fig.**6: **Bleche-Ladevorrichtung**
Wenn die Menge des Fruchtfleisches eine bestimmte Höhe auf einem Blech (**50**) im Container (**16**) erreicht hat, fällt ein weiteres Blech aus dem Bleche-Behälter (**44**) in den Container hinunter, so daß die Presse gleichmäßig die Olivenmasse auspressen kann. Die Bleche-Ladevorrichtung **(44)** arbeitet automatisch. Der Teleskop-Stab in der Mitte **(51)** dient dazu, daß die Bleche exakt in den Container bis auf den Boden fallen können, ohne zu kippen.
Der Wiegemechanismus nach einem bestimmten Gewicht der eingefüllten Masse gibt Signal zu dem Regler (**52**) der Blechlademaschine, ein Blech (**50**) auf das Füllmaterial in den Container hinunter zu lassen.
**Fig**.7 zeigt den inneren oberen Rand (**18**) des Containers (**16**). Dargestellt ist auch in Vergrößerung das **Ölauslaßventil.**

## Patentansprüche

1. Anlage zur Kaltpressung für Olivenfleisch nach vorheriger Entfernung des Olivenkernes, bestehend aus einer Entkernungstnaschine **(1),** die bei der Trennung von Kernen und Olivenfleisch gleichzeitig den neben ihr stehenden zylindrischen, doppelwandigen Container **(16)** der Bestandteil der Anlage ist, mit Olivenfleisch und Ölmost füllt, über dem sich bei der Füllung eine Bleche-Lademaschine **(44)** befindet, die nach Wiegen der Masse einer bestimmten Füllmenge automatisch in Abständen ein kreisrundes, genau passendes Blech **(50)** eines nach dem anderen auf das Füllgut im Container hinunterläßt bis zur vollständigen Füllung des Containers, wobei der Container Ventile umfasst und auf einer Preßstraße mit Laufband **(43)** steht, die mehrere leere und gefüllte Container **(16)** in der Reihe aufgenommen hat, wo der jeweils von der Entkernungsmaschine **(1)** gefüllte Container durch den nachfolgenden Container auf den Platz der Pressezentrifuge **(30)**, die Bestandteil der Anlage ist, geschoben wird, wo er mit Hilfe eines Schienenmechanismus hydraulisch heruntergelassen wird auf den Boden der Pressezentrifuge, wo vor und während des Pressens und Zentrifugierens, die Ventile des Containers geöffnet sind und die in dem Hohlraum zwischen Außen- und Innenwand **(24)** des Containers gesammelte Flüssigkeit in ein Kanalsystem lassen, von einem Behälter aufgefangen und zu einem Trennfilter geleitet wird, wobei nach erfolgter Pressung der Container auf die Höhe der Preßstraße hydraulisch gehoben wird, von dem nächstgefüllten Container, der den Platz an der Presse einnimmt, zum Ausgang geschoben und zur Entleerung, bei hochgezogener Außen- und Innenwand **(24),** von einer Gabelstaplervorrichtung, deren zwei Gabeln durch zwei durchgehende Aussparungen des Containerbodens unter das unterste Blech fassen, die gepreßte Olivenmasse auf den Blechen forttransportiert wird, wobei die Entkernungsmaschine **(1)** einen Olivenkorb mit Olivendurchlaß, eine Spindel mit Messern, eine Siebzentrifuge mit Saugpropeller, Sieb, Mahlsteinen, einen Olivenfleisch-Ausgang und einen Kerne - Ausgang aufweist, die so angeordnet sind, daß nach Aufnahme der Oliven in dem Olivenkorb **(2)** mit dem nach Größe und Menge der Oliven veränderlichen und verschließbaren Olivendurchlaß **(3)** durch Rotieren ihrer Spindel mit den Messern **(15)** die Oliven schlägt, so daß sich Kerne und Olivenfleisch trennen, das Fleisch auf eine Siebzentrifuge **(7)** fällt, durch einen Saugpropeller **(11)** unter das Sieb **(7)** zu den horizontal drehenden Mahlsteinen **(10)** mit der Zentrifugalkraft saugt und zermahlt und zu dem Olivenfleisch-Ausgang **(6)** befördert, die Kerne das Sieb nicht passieren können und seitlich zu dem Gittergeflecht **(8)** fliegen, wonach sie über den Kerne-Ausgang **(5)** die Entkernungsmaschine **(1)** verlassen,
wobei die Entkernungsmaschine **(1)** einen Motor **(9)** , einen Mechanismus für drei Geschwindigkeiten **(13)** , desgleichen Druckwasserdüsen aufweist, die durch die Wasserzuleitung **(12)** in die Entkernungsmaschine gespeist, die Wände und Messer von Zeit zu Zeit benetzen,
wobei die zylindrische Bleche-Lademaschine **(44)** mit einem in ihrer Mitte befindlichen teleskopartigen Führungsstab **(51)** bis zur Mitte des Bodenblechs des Containers **(16)** reichend die kreisrunden, in der Mitte gelochten Trenn-Bleche **(50)** in das Füllgut im zylinderförmigen Container **(16)** automatisch mit Hilfe eines Reglers **(52)** in bestimmten Abständen aus einem Bleche-Reservoir herabläßt,
wobei der Container **(16)** in einem Hohlraum **(20)** zwischen Außen- und Innenwand **(24)** durch den Filter **(25)** Ölmost aufnimmt,
wobei auf dem Boden der Pressezentrifuge **(30)** zwei parallele
Vertiefungen **(34)** sich befinden, und in dem Boden dieser Vertiefungen es zwei Schienen **(45)** gibt in der ganzen Länge der Vertiefungen, diese Schienen hochgeschoben werden, deren Oberteil ist, so daß die Schienen **(28)** unter dem Boden **(27)** des Containers **(16)** hineinfassen, und hydraulisch hochgeschoben oder heruntergefahren werden, so daß wenn der Container in der Mitte der Pressezentrifuge Platz genommen hat, sich automatisch hydraulisch die Hebevorrichtung herunter senkt, so daß die Schienen des Containers **(28)** exakt auf der Mitte der Pressezentrifuge sitzen,
wobei der Boden der Pressezentrifuge einen ringsum laufenden Auffangkanal **(33)** für den Ölmost besitzt, in den sich der Zusammenfluß **(32a)** von vier Abflüssen **(32)** des Containers **(16)** bei Öffnung der Ventile ergießt,
wobei die Pressezentrifuge in ihrer Mitte einen Preßstab **(21)** , der hydraulisch arbeitet und an seiner tiefsten Stelle aufweist einen kreisförmigen Preßstempel **(23)** hat, der so konstruiert ist, daß
er keine Flüssigkeit nach oben steigen läßt, wobei der Preßstab nicht dreht, wenn die Zentrifuge arbeitet, nur der Preßstempel zusammen mit dem gesamten Container, wobei die Bodenplatte **(30)** der Presse-Zentrifuge mit der Außen- und Innenwand **(24)** und dem Boden **(27)** des Containers **(16)** während des Pressens und Zentrifugierens fest verschlossen ist, wobei die Bodenplatte des Containers vor Verlassen des Preßbodens wieder aufgeschlossen, Außen- und Innenwand hochgezogen und das festgepreßte Material auf den Blechen **(50)** auf dem Containerboden **(27)** durch zwei Gabeln einer Gabelstaplervorrichtung, unter das unterste Blech in die Aussparungen **(19)** des Containerbodens **(27)** fassend, entfernt werden.

2. Anlage nach Anspruch 1, **dadurch gekennzeichnet, daß** die Entkernungsmaschine **(1)** in mehreren geteilten Stufen der Spindel mit Messern **(15)** arbeitet.

3. Anlage nach Anspruch 1 oder 2, **dadurch gekennzeichnet, daß** die Entkernungsmaschine **(1)** mit einem Schaufelwandsäuberer **(4),** der das geschlagene Material von der oberen Stufe sammelt und hinunter befördert in die Mitte der trichterartigen Öffnung zur nächsten Stufe, von der aus sich der Vorgang bis zur letzten Stufe wiederholt, arbeitet.

4. Anlage nach Anspruch 1, 2 oder 3, **dadurch gekennzeichnet, daß** die Entkernungsmaschine **(1)** mit zwei Saugventilatoren **(11)** und **(11a)** arbeitet, die das Olivenfleisch unter das Sieb **(7)** zu zwei Ausgängen **(6),** rechts und links, unter den stehenden Mahlstein **(10)** befördern.

5. Anlage nach Anspruch 2 oder 4, **dadurch gekennzeichnet, daß** die Entkernungsmaschine **(1)** das Olivenfleisch mit dem beweglichen Mahlstein **(10a)** durch Zentrifugalkraft ansaugt und mahlt.

6. Anlage nach Anspruch 1 oder 2, **dadurch gekennzeichnet, daß** die Entkernungsmaschine **(1)** das gemahlene Olivenfleisch nach Ausgang **(6)** oder **(6a)** mit einer Schnute **(17)** in die trichterähnliche Verbreiterung **(18)** des inneren oberen Randes des Containers **(16)** füllt.

7. Anlage nach Anspruch 1 oder 2, **dadurch gekennzeichnet, daß** die Entkernungsmaschine **(1)** im Kanal für die Kerne zum Ausgang der Kerne **(5)** hin halbkreisförmige Erhebungen (7b) im Sieb **(7),** zur Entfernung des restlichen Olivenfleisches besitzt.

8. Anlage nach Anspruch 7, **dadurch gekennzeichnet, daß** die Entkernungsmaschine **(1)** vor dem Kerneausgang **(5)** eine ringsherum laufende Schaufel **(4b),** die verbunden ist mit dem Saugventilator (**11),** besitzt.

9. Anlage nach Anspruch 7 oder 8, **dadurch gekennzeichnet, daß** die Entkernungsmaschine **(1)** im Kanal für die Kerne ein Sieb **(7)** für das von den Kernen noch abgefallene Olivenfleisch besitzt, von wo es durch einen Schaber **(4a)** gesammelt und hinunterbefördert wird durch die Ventilatoren **(11)** und **(11a)** zum übrigen Olivenfleisch.

10. Anlage nach Anspruch 1 oder 2, **dadurch gekennzeichnet, daß** die Entkernungsmaschine **(1)** mit einem Elektromotor **(9)** mit einem Mechanismus für drei verschiedene Geschwindigkeiten **(13)** arbeitet, wobei die niedrigste Geschwindigkeit die Spindel mit den Messern **(15)** hat, die nächst höhere Geschwindigkeit haben die Saugventilatoren (11), die die Kerne hinausbefördern, die höchste Geschwindigkeit bewegt die Mahlvorrichtung und zentrifugiert gleichzeitig Olivenfleisch und Flüssigkeit nach außen.

11. Anlage nach Anspruch 1 oder 2, **dadurch gekennzeichnet, daß** die Entkernungsmaschine **(1)** zwei bewegliche Mahlsteine **(10)** und **(10 a)** besitzt, wobei der untere Mahlstein **(10)** schneller ist als der obere Mahlstein **(10a).**

12. Anlage nach Anspruch 1, **dadurch gekennzeichnet, daß** die Preßstraße mit Laufband **(43)** kreisförmig sein kann und daß die Container **(16)** sich zwischen dem Innenkreis und Außenkreis dieser Preßstraße befinden, wobei der Platz der Pressezentrifuge **(26)** neben dem Platz des Ausganges befindet.

13. Anlage nach Anspruch 12, **dadurch gekennzeichnet, daß** die Entkernungsmaschine **(1)** in der Mitte des Innenkreises der Preßstraße steht, sich um ihre Achse zu dem nächst zu füllenden Container **(16)** dreht, wobei die Blechelademaschine **(44)** über dem zu füllenden Container steht, mit der Entkernungsmaschine **(1)** gekoppelt ist, und auf einem beweglichen Standgerät auf Stelzen am Außenkreis synchron die Bewegung der Entkernungsmaschine zum nächsten Container mitvollzieht.

14. Anlage nach Anspruch 1 oder 12, **dadurch gekennzeichnet, daß** die Preßstraße unter ihrem Laufband einen Motor besitzt, der den Container während der Füllung in eine drehende Bewegung versetzt, desgleichen einen Motor unter jedem Containerplatz hat, der den Container beim Füllen in Vibration versetzt.

15. Anlage nach Anspruch 1, **dadurch gekennzeichnet, daß** jeder Container **(16)** auf seinem Boden **(27)** innen mit einem kreisrunden Blech **(50)** ohne Loch in der Mitte ausgerüstet wird, um darauf die erste Portion des Füllgutes bei der Füllung aufzunehmen.

16. Anlage nach Anspruch 1 oder 15, **dadurch gekennzeichnet, daß** jeder Container **(16)** unter seinem Boden **(27)** zwei
Schienen **(28)** besitzt, die in die hydraulisch hochgeschobenen Schienen **(45)** hineinfassen.

17. Anlage nach Anspruch 1, **dadurch gekennzeichnet, daß** jeder Container **(16)** auf seinem Boden **(27)** vier Ausflüsse **(32)** zum Ablassen der Flüssigkeit aus dem Hohlraum **(20)** der Containerwände **(24),** die durch Ventile geöffnet und geschlossen werden, besitzt.

18. Anlage nach Anspruch 1, **dadurch gekennzeichnet, daß** der Boden der Basis der Pressezentrifuge **(26)** außer dem kreisrunden Ölabflußkanal **(33),** noch einen Vertiefungskanal **(31)** auf dem Zentrifugenboden besitzt.

19. Anlage nach Anspruch 1 oder 18, **dadurch gekennzeichnet, daß** der Boden der Basis der Presse eine äußere Doppelkreisvertiefung besitzt, die Außenwand **(24)** des Containers **(16)** hineinzusetzen und eine innere Doppelkreisvertiefung die Innenwand **(24)** hineinzupassen, die Vertiefungen sind jeweils durch Dichtungsringe gegen den Auslauf von Flüssigkeit geschützt.

20. Anlage nach Anspruch 1 , 18 oder 19, **dadurch gekennzeichnet, daß** auf der Basis des Pressezentrifugenbodens **(26)** vier Säulen **(29)** der Pressezentrifuge verankert sind, auf dem der Deckel **(22a)** der gesamten Presse-Anlage aufsitzt, der den Container **(16)** in der Zentrifuge und die Presse-Zentrifuge stabil hält.

21. Anlage nach Anspruch 1, 18, 19 oder 20, **dadurch gekennzeichnet, daß** der Containerhalter **(22b)** den Container **(16)** in seiner Position hält, damit er mitdreht, wenn die Zentrifuge in Bewegung ist.

## Claims

1. Unit for cold pressing the flesh of olives after previous removal of olive kernel, consisting of a core removing machine **(1)**, which at the separation of kernel and olive flesh at the same time fills a cylindrical, double walled container **(16),** which is part of fhe unit, standing next to it as part of the unit, with olive flesh and oil must, over which during the filling, a plate loading machine **(44)** is found, which after weighing the mass of a determined filling quantity automatically at intervalls lets down a circular, perfectly
fitting plate **(50)** one after another on the filling mass into the container, until the container is completely filled, whereby the
container has valves and is present on a pressing station way with a conveyer belt **(43),** which several empty and full
containers **(16)** has taken up in a row, where in each case the container last filled by the core removing machine **(1)** is shuffled by the following container on the place of the press centrifuge **(30),** which is part of the unit, where it is hydraulically lowered down on to the floor of the pressing centrifuge by a rail
mechanism, where before and during the compressing and
centrifugation, the valves of the container are opened and the fluid, that is collected in the cavity between the outer and inner wall **(24)** of the container, is let into a canal system, from where it is caught by a tank and then directed to a separating filter, and
after occurred pressing the container is lifted hydraulically on to the height of the pressing station way, is pushed to the exit by the next filled container, which takes its place at the press centrifuge, and there for the emptying with pulled up outer wall and inner wall **(24)** is caught by forklift device, which with two forks catch two continuous recesses under the lowest metal plate of the container bottom and transport the pressed olive mass on the tin plates away,
and the core removing machine **(1)** has an olive basket with an olive flush outlet, spindel with knives, a sieve centrifuge with suction propeller, a sieve, grinding stones, an olive flesh outlet and a kernel outlet, which are arranged in such a way, that after admission of the olives in the olive basket **(2)** with a variable and closable according to size and quantity of the olives olive passage **(3),** by rotating its spindle with the knives **(15),** beats the olives, so that cores and olive flesh separate, the flesh falls on
a sieve centrifuge **(7),** sucks through a suction propeller **(11)** under the sieve **(7)** to the horizontally turning grinding stones **(10),** sucks by centrifugal force and pulverizes and then conveys to the olive flesh outlet **(6),** and the cores, which cannot pass the sieve, fly at the side to the wire netting **(8),** and after that they leave the core removing machine by the kernel outlet **(5),**
and the core removal machine **(1)** has an engine **(9),** which works with a mechanism for three speeds **(13),** has likewise pressure water nozzles, which are fed through the water feeding line **(12)** into the core removal machine and moisten the walls and the knives from time to time,
and the cylindrical plate loading machine **(44)** with its guiding rod **(51)** which is formed telescope like, is located in its middle and
reaches down to the middle of the bottom plate of the container **(16),** lowers down the circular, in the middle punched dividing tin plates **(50),** onto the filling of the cylindrical container **(16)** automatically with the help of a regulator **(52)** in determined intervals from a tin plate reservoir,
whereby the container **(16)** in a hollow space **(20)** between outer and inner wall **(24**) absorbs the oil must through a filter **(25)**,
whereby on the floor of the press centrifuge **(30)** two parallel indentations **(34)** are present, and in the floor of these
indentations two rails **(45)** are elevated, whose upper part is indented so that the rails **(28)** under the bottom **(27)** of the container **(16)** fit and are automatically hydraulically elevated or
brought down, so that if the container is positioned itself in the middle of the press centrifuge, the hoisting device automatically hydraulically sinks down, so that the rails of the container **(28)** sit exactly in the middle of the press centrifuge,
whereby the floor of the press centrifuge has a circumferentially running collecting duct **(33)** for the oil must, in which the confluence **(32a)** of the four discharges **(32)** of the container **(16)** gushes out during the opening of the valves,
whereby the press centrifuge in its middle has a pressing rod (21), which works hydraulically and in its deepest place a circular press punch **(23),** which is constructed in such a manner, that it does not allow any fluid to climb upwards,
whereby the pressing rod does not rotate, when the centrifuge is working, only the press punch together with the whole container,
and where the base plate **(30)** of the press centrifuge to the outer and inner wall **(24)** and the floor **(27)** of the container **(16)** is firmly closed during the pressing and centrifugating,
and the base plate of the container is opened again before leaving the press floor, outer and inner walls are lifted and the firmly pressed material on the tin plates **(50)** on the container bottom **(27)** are removed by two forks of a forklift mechanism, catching under the lowest tin plate in recesses **(19)** in the bottom **(27)** of the container.

2. Unit according to claim 1, **characterised in that** the core removal machine **(1)** works on several divided levels of the spindle with knives **(15).**

3. Unit according to claim 1 or 2, **characterised in that** the core removal machine **(1)** works with a blade wall cleaner **(4),** which collects the chipped material from the upper level and forwards it down to the middle of the funnel like opening to the next level from where the process repeats up to the last level.

4. Unit according to claim 1,2 or 3, **characterised in that** the core removal machine **(1)** works with two suction ventilating fans **(11)** and **(11a),** which transport the olive flesh under the sieve **(7)** to two outlets **(6),** right and left, under the standing grinding stone **(10).**

5. Unit according to claim 2 or 4, **characterised in that** the core removal machine **(1)** sucks in the olive flesh with the movable grinding stone **(10a)** by centrifugal force and grind it.

6. Unit according to claim 1 or 2, **characterised in that** the core removal machine **(1)** fills the ground olive flesh after outlet **(6)** or **(6a)** with a spout **(17)** in the funnel like widening **(18)** of the inner upper boundary of the container **(16).**

7. Unit according to claim 1 or 2, **characterised in that** the core removal machine **(1)** has in the canal for the kernel towards the outlet of the kernel **(5)** semicircular uprisings **(7b)** in the sieve **(7)** for removing the rest of the olive flesh.

8. Unit according to.claim 7, **characterised in that** the core removal machine **(1) has** before the kernel outlet **(5)** a circular moving shovel **(4b),** which is connected to the exhaust fan **(11).**

9. Unit according to claim 7 or 8, **characterised in that** the core removal machine **(1)** in the canal for the kernel has a sieve, **(7)** for olive flesh still fallen away from the kernel from where it is collected by a scrapper **(4a)** and transported down through ventilators **(11)** and **(11a)** to the remaining olive flesh.

10. Unit according to claim 1 or 2, **characterised in that** the core removal machine **(1)** works with an electromotor **(9)** with a mechanism for three different speeds **(13),** the lowest speed has the spindle with knives **(15),** the next higher speed have the exhaust fans **(11),** which let out the kernel, the highest speed moves the grinding device at the same time by centrifugating let olive flesh and fluid to the outside.

11. Unit according to claim 1 or 2, **characterised in that** the core removal machine **(1)** has two movable grinding stones **(10)** and **(10a),** where the lower grinding stone **(10)** is faster than the upper grinding stone **(10a).**

12. Unit according to claim 1, **characterised in that** the pressing station way with a conveyer belt **(43)** can be circular and the containers **(16)** are between the inside circle and the outside circle of this pressing station way and the place of the press centrifuge **(26)** is considered to be next to the place of the exit.

13. Unit according to claim 12, **characterised in that** the core removal machine **(1)** stands in the middle of the inner circle of the pressing station way, turns on its axis to the nearest container **(16)** next to be filled and the tin plate loading machine **(44)** is standing om top of the container to be filled, and is linked to the core removal machine **(1)** and standing at the outer circle on a movable stand on stilts and moves synchronously with the movement of the core removal machine to the next to be filled container.

14. Unit according to claim 1 or 12, **characterised in that** the pressing station unter its conveyer belt has a motor, which sets the container during filling into rotation; likewise has a motor under each place of a container, to set the container during filling in vibration.

15. Unit according to claim 1, **characterised in that** each container **(16)** is equipped on its floor **(27)** interior with a circular tin plate **(50)** without a hole in the middle so to take the first portion of the filling product during the filling.

16. Unit according to claim 1 or 15, **characterised in that** each container **(16)** under its bottom **(27)** has two rails **(28),** which from the ground hydraulically elevated rails **(45)** fit in.

17. Unit according to claim 1, **characterised in that** each container **(16)** has four effluences **(32)** in its floor **(27)** for the discharge of fluid from the hollow space **(20)** of the container walls **(24), which** can be opened and shut by valves.

18. Unit according to claim 1, **characterised in that** the floor of the basis of the press centrifuge **(26)** apart from the perfectly circular oil drain channel **(33),** also has an deeper hollow canal **(31)** on the ground of the press centrifuge.

19. Unit according to claim 1 or 18, **characterised in that** the ground of the basis of the press centrifuge has an external double circle deepening to fit in the outer wall **(24)** of the container **(16)** and a inner double circular indentation, which fit in the inner wall **(24),** these deepenings are protected by gaskets against fluid discharge.

20. Unit according to claim 1, 18, 19 or 20, **characterised in that** on the base of the press centrifugal floor **(26)** four pillars **(29)** of the press centrifuge are anchored, on which the cover **(22a)** of the total press-installation sits, which holds the container **(16)** in the centrifuge and the press centrifuge itself stable.

21. Unit according claim 1,18,19 or 20, **characterised in that** the container holder **(22b)** holds the container **(16)** in its position, so that it turns along, when the centrifuge is in motion.

## Revendications

1. Installation destinée a la pression a froid pour pulpe d'olive après précédente l'élimination de chairs d'olive du grain d'olive, se composant d'une machine d'élimination de noyau **(1),** qui pendant la séparation des noyaux et de la pulpe d'olives remplit un récipient cylindrique container **(16)** à double paroi, qui est part d'installation, avec des chairs d'olive et du moût de l'huile, en même temps, au-dessus de ce récipient on trouve, pendant le remplissage une machine de chargement de plaques **(44),** qui selon le poids de la masse d'une quantité déterminée de remplissage automatiquement à des intervalles laisse en bas d'une circulaire, parfaitement tôle plaque de raccord **(50)**, l'une après l'autre, dans le récipient sur la masse de remplissage, jusqu' à ce que le récipient soit complètement rempli, ce que le récipient container a des soupapes et se trouve sur un poste de pressage avec une bande de transportation **(43),** où plusieurs vide et rempli containers **(16)** ont pris dans rangée, où chaque fois un recipient container est rempli de la machine d'élimination de noyau **(1),** il est poussé sur la place du centrifugeuse de presse **(30),** qui est part d'installation, par le container suivant, où ensuite est hydrauliquement abaissé dessus au plancher de la centrifugeuse de presse par un mécanisme de rail, où avant et pendant comprimer et la centrifugation les soupapes du container sont ouvertes, et le fluide, qui est collecté dans la cavité entre le mur extérieur et le mur intérieur **(24)** du container est laissé dans un system de canals, est attrapé par un recipient et puis dirigé vers un filtre de séparation, et après le pressage le container est soulevé hydrauliquement sur la hauteur de la bande de transport du poste de pressage, poussé par le container, qui etait rempli immédiatement après et qui prend sa place à la presse, à la sortie et au vidage, avec les murs extérieur et intérieur **(24)** montés, en disposition de deux fourchettes d'un mécanisme de fourches d'élévation par deux continus blancs du sol de container prendent sous la plus bas tôle la pressée masse d'olives sur les tôles plaques et les transportent en dehors, et la machine d'élimination de noyau **(1)** possède un panier d'olive **(2)** avec une sortie affleurante d'olive **(3),** un fuseau avec des couteaux **(15),** une centrifugeuse de tamis **(7)** avec une hélice propulseur d'aspiration **(11),** un tamis, des pierres de broyage de retournement **(10)**, une sortie pour le pulpe d'olive **(6)** et une sortie pour les noyaux **(5),** qui sont tellement arrangés, que après le accueil des olives dans le panier d'olives **(2),** ils battent le passage d'olives, la sortie affleurante d'olive **(3),** qui est variable selon la taille et la quantité des olives, et peux être fermée, tournant son fuseau avec les couteaux **(15)** battent les olives, bien que des noyaux et la chair d'olive se séparent, la chair tombe sur un centrifugeuse de tamis **(7),** aspirée par un propulseur d'aspiration **(11),** sous le tamis horizontalement aux pierres de broyage de retourement **(10)** et avec la force centrifuge, la pulvérise et la transporte à la sortie d'olive-chairs **(6),** doncque les noyaux non peuvent pas passer le tamis que volent latéralement au treillis de grille **(8),** après quoi ils quittent la machine d'élimination de noyau **(1)** sur la sortie de noyaux **(5),** et la machine d'élimination de noyau **(1)** possède un moteur **(9)** qui travaille avec un mécanisme pour trois vitesses **(13),** possède également des buses, tuyères d'eau de pression, qui sont alimentées par la ligne alimentation de l'eau dans la machine **(12),** humectent par la transmission d'eau dans la machine d'élimination de noyau les murs et les couteaux de temps en temps,
est la machine de chargement cylindrique **(44)** de tôles plaques, avec sa tige guidante, formée comme téléscope, a son centre **(51)** laisse en bas sur le sol bas du container **(16)** des tôles circulaires de séparation **(50)** sur la masse de remplissement dans le container**(16)** automatiquement à l'aide du régulateur **(52),** dans intervalles distinctes, d'un reservoir de tôles,
et le container **(16)** prend moûts d'huile dans une cavité **(20)** entre le mur extérieur et intérieur **(24)** par le filtre **(25),**
et sur le plancher de la centrifugeuse de presse **(30)** se trouvent deux approfondissement paralléles **(34)** et dans le bas de ces approfondissements ce sont deux rails **(45),** dans toute la longueur des approfondissement, et quand les rails sont élévés, deviennent içi la partie inférieure, si bien que les rails **(28)** sous le sol **(27)** du container **(16)** saisient içi, le dispositif levant descende automatiquement hydrauliquement en bas, de sorte que les rails du récipient se repose exactement au milieu de la centrifugeuse de la presse,
et le plancher de la centrifugeuse de presse possède un circonférentiellement roulement collecteur **(33)** pour l'huile moûts, en lequel le confluent **(32a)** des quatre évacuations **(32)** du récipient container **(16)** jaillit dehors pendant l'ouverture des soupapes,
et la centrifugeuse de presse à son centre a une tige de pressage **(21),** qui travaille hydrauliquement, et dans sa place plus profonde un poinçon circulaire de presse **(23),** qui est construit dans une telle manière, qu'il ne permet aucun fluide à s'élever vers le haut, et la tige de pressage ne tourne pas, si la centrifugeuse travaille, seulement le poinçon de presse avec le container total, et la plaque de plancher **(30)** de la presse centrifuge et les mur externe et intérieur **(24)** et le sol **(27)** du container pendant comprimer et la centrifugation sont fermement fermés,
et la plancher-plaque **(30)** du récipient, avant delaisser le plancher du presse est ouverte à nouveau, encore les mur extérieur et intérieur sont élévés et le matériel fermement pressé sur les tôles **(50)** sur le sol de container **(27),** est enlevé,
en prenant par deux fourchettes dispositif de chariot élévateur,
sous le dernier tôle dans blancs **(19)** du sol de container **(27)** et transporté en dehors.

2. Installation selon la revendication 1, **caractérisé en ce que** la machine d'élimination de noyau **(1)** travaille dans plusieurs marches divisées du fuseau avec des couteaux **(15).**

3. Installation selon la revendication 1 ou 2, **caractérisé en ce que** la machine d'élimination de noyau **(1)** avec scrappeur **(4),** qui ramasse le matériel battu de la supérieure marche et en bas, de manière transportée au centre de couverture en forme d'entonnoir à la prochaine marche, de quoi travaille de lui-même, le processus répète jusqu'à la dernieère marche.

4. Installation selon la revendication 1, 2 ou 3, **caractérisé en ce que** la machine d'élimination de noyau **(1)** travaille avec deux ventilateurs d'aspirations **(11)** et **(11a),** qui transportent la chair d'olives sous le tamis **(7)** à deux sorties **(6)** à droite et à gauche, disposée sous les pierres de broyage de retourement **(10).**

5. Installation selon la revendication 2 ou 4, **caractérisé en ce que** la machine d'élimination de noyau **(1)** aspire par la force centrifugale la chair d'olives et moule avec une pierre de broyage de retourement **(10a)** mobile.

6. Installation selon la revendication 1 ou 2, **caractérisé en ce que** la machine d'élimination de noyau **(1)** remplisse la chair d'olives moulue après la sortie **(6)** ou **(6a)** d'extension **(17)** dans l'élargissement semblable à lèntonnoir **(18)** du supérieur bord intérieur du container **(16).**

7. Installation selon la revendication 1 ou 2, **caractérise en ce que** la machine d'élimination de noyau **(1)** possède dans le canal de noyau vers la sortie **(5)** des perceptions semi-circulaires là **(7b)** dans le tamis **(7),** à la éloignement de la pulpe d'olives restante dans le canal pour le noyaux à la sortie des noyaux.

8. Installation selon la revendication 7, **caractérisé en ce que** la machine d'élimination de noyau **(1)** devant la sortie de noyau **(5)** possède une pelle courante autour **(4b),** au ventilateur d'aspiration **(11).**

9. Installation selon la revendication 7 ou 8, **caractérisé en ce que** la machine d'élimination de noyau **(1)** possède un tamis **(7)** pour la chair d'olives encore tombée par les noyaux dans le canal de noyau, d'où cela par un racloir **(4a)** de manière ramassée et transportée par les ventilateurs **(11)** et **(11a)** à la place de la pulpe toute d'olives.

10. Installation selon la revendication 1 ou 2, **caractérisé en ce que** la machine d'élimination de noyau **(1)** travaille avec un électromoteur **(9)** avec un mécanisme de trois vitesses différentes **(13),** la plus basse vitesse a le fuseau avec les couteaux **(15),** la vitesse plus haute ont les propulseurs d'aspiration **(11)** qui transportent les noyaux en dehors, et la plus haute vitesse a le retourement, qui centrifuge et remue en même temps la chair d'olives et du liquide en dehors.

11. Installation selon la revendication 1 ou 2, **caractérisé en ce que** la machine d'élimination de noyau **(1)** possède deux pierres de broyage de retournement **(10)** et **(10a)** mobiles, et le pierre inférieur **(10)** est plus rapide que le pierre supérieur **(10a).**

12. Installation selon la revendication 1, **caractérisé en ce que** le poste de pressage avec une bande de transportation **(43)** peut être circulaire et les container **(16)** se trouvent entre le cercle intérieur et cercle extérieur de cette rue du poste de pressage et la place de la centrifugeuse de presse **(26)** est à côté de la place de la sortie.

13. Installation selon la revendication 12, **caractérisé en ce que** la machine d'élimination de noyau **(1)** se trouve au cercle intérieur dans la rue du poste de pressage, tourne autour de son axe au container à remplir le plus près **(16),** la machine de chargement de plaques **(44),** se trouve au-dessus du container à être rempli et est couplée avec la machine d'élimination de noyau **(1)** et sur un appareil de place mobile sur des échasses au cercle extérieur synchrone le mouvement de la machine d'élimination de noyau et exécute ensemble au prochain container.

14. Installation selon la revendication 1 ou 12, **caractérisé en ce que** le poste de pressage avec une bande de transportation sous son ruban de cours possède un moteur, qui met le container (16) dans un mouvement tournant pendant le remplissage, et possède un moteur au dessous de chaque place de container, qui met le container à remplissement en vibration.

15. Installation selon la revendication 1, **caractérisé en ce que** chaque container **(16)** sur son sol **(27)** est équipé avec une tôle ronde **(50)** sans trou au centre à prendre à celà la première portion de la masse chez le remplissage.

16. Installation selon la revendication 1 ou 15, **caractérisé en ce que** chaque container **(16)** sur son sol **(27)** possède deux rails **(28),** dans lesquels les rails hydrauliquement en haut poussés **(45)** enchâssent.

17. Installation selon la revendication 1, **caractérisé en ce que** chaque container (16) sous son sol **(27)** possède quatre écoulements **(32)** pour faire écouler le liquide de la cavité **(20)** des murs de container **(24),** qui sont ouverts ou fermés par des soupapes

18. Installation selon la revendication 1, **caractérisé en ce que** le plancher de la base de la centrifugeuse de presse **(26)** possède à part le canal d'écoulement d'huile rond **(33)** encore un canal approfondissement **(31)** sur le sol de centrifugeuse.

19. Installation selon la revendication 1 ou 18, **caractérisé en ce que** le sol de la base de la presse possède un approfondissement de cercle double extérieur, pour ajuster le mur extérieur **(24)** du container **(16)** et un approfondissement de cercle double intérieur de mettre dedans la cloison **(24),** mur intérieur, les approfondissement sont protégées chaque fois par des bagues d'étanchéité contre l'espace libre du liquide.

20. Installation selon la revendication 1,18 ou 19, **caractérisé en ce que** sur la base du sol de centrifugeuse de presse **(26)** quatre colonnes **(29)** de la centrifugeuse de presse sont ancrées, sur quoi le couvercle **(22a)** des installations de presse totales s'assoit qui tient le container **(16)** dans la centrifugeuse et la centrifugeuse de presse stable.

21. Installation selon la revendication 1,18, 19 ou 20, **caractérisé en ce que** le detenteur de container **(22b)** tient le container **(16)** dans sa position pour qu'il cotourne, si la centrifugeuse est en mouvement.
